# EUROPEAN PATENT SPECIFICATION

(11) **EP 2 220 421 B1**
(45) Date of publication and mention of the grant of the patent: **22.02.2012**
(21) Application number: 07852154.9
(22) Date of filing: 21.12.2007
(51) Int. Cl.: F16M 13/02

(54) **ADJUSTABLE MOTORIZED SCREEN MOUNT**
VERSTELLBARE HALTERUNG FÜR MOTORISIERTEN BILDSCHIRM
MONTURE D'ECRAN REGLABLE A MOTEUR

(43) Date of publication of application: 25.08.2010
(73) Proprietor: Fiedler Innovations International AB, 342 60 Moheda (SE)
(72) Inventor: FIEDLER, Joakim, S-342 60 Moheda (SE)
(74) Representative: Allee, Harriet Eva Charlotta
(86) International application number: PCT/SE2007/001162
(87) International publication number: WO 2009/082289

(56) References cited:
- WO-A2-2007/081673
- JP-A- 2006 329 310
- US-A1- 2006 022 108
- US-A1- 2006 060 439
- US-A1- 2007 007 401
- US-A1- 2007 096 606

## Description

### Field of the invention

The present invention relates to an adjustable motorized screen mount comprising a stand, adapted to be placed on a floor or attached to a wall or a ceiling; a bracket, adapted to be attached to a screen; and a motor, arranged to rotate a motor output shaft such that, upon rotation of the motor shaft, the rotary motion is transmitted, via a mechanical transmission, to a transmission output shaft which moves the bracket relative to the stand.

### Background of the invention

For having the best viewing comfort when watching the screen of a television set, a video monitor, a computer monitor or the like, a suitable viewing angle should be selected, i.e. the screen and the viewer should be positioned in such a relation to each other that the perceived watching experience of the viewer be optimized. For a viewer to be able to watch the screen from different locations at different occasions, it is desirable to be able to turn the screen for an optimum viewing experience from each location.

Also the ability to move the screen is desired. For example, using a mount that can translate a screen vertically, it is possible to hide e.g. a flat panel TV behind any piece of furniture, and to elevate it only when it is to be used.

Adjustable screen mounts are known, see for example JP 2006-329310. WO2004111523 discloses an adjustable screen mount for mounting a screen on a wall, wherein the mount enables the screen to be turned about a vertical axis. Also motorized adjustable screen mounts are known; e.g. European Registered Community Design no. 000503420-0001, referred to below as the Lava mount as the device is sold by Lava Electronics, discloses a motorized mount having a wall mount bracket and a screen mount bracket that can be turned up to a maximum of 90° in relation to the wall bracket around a pivot axis. The wall bracket of the Lava mount further incorporates an actuator, consisting of a motor, which operates a telescopic arm. One end of the telescopic arm is journalled in the wall bracket, and the other in the screen bracket. In its retracted position, the actuator is hidden behind the screen, which then is parallel to the wall and spaced from the same by a distance that is sufficient to accommodate the entire actuator. By operating the motor at a constant speed, the arm is extended at a constant speed, which makes the screen bracket rotate at a decreasing angular speed around the pivot axis.

The spacing between the wall and the screen in the retracted position, as well as the visual exposure of the actuator as the mount is opened, may be undesired from an aesthetic point of view. Further, as the speed of the rotation of the screen bracket will vary across the turning range of the bracket, an operator may find the rotary speed to be either too slow or too fast depending on the position of the bracket. As a typical electric motor operates at a constant, high rotary speed, it is difficult to achieve a slow and constant motion of the screen bracket without using a large or complicated transmission mechanism. It may also be desirable to be able to adjust the stand manually, without having to locate, e.g., a remote control for operating the motor.

Another problem with known adjustable wall mounts, is that they have a turning range that is limited by the construction of the rotary mechanism of the mount. No motorized mount has a mechanism that is suited for turning the screen bracket indefinitely about an axis, as well as elevating/lowering the screen bracket relative to a stand or wall bracket.

### Summary of the invention

It is an object of the present invention to provide an adjustable, motorized screen mount which is compact, simple in its construction and comprises few moving parts; which can be adjusted by hand as well as by a motor; which is capable of carrying and moving heavy weights; which has the motor and all its transmission parts in hidden in a single, aesthetically appealing casing; whose turning range is not limited by the rotary mechanism; and which can either be placed on a floor or mounted to a wall or a ceiling.

This object is achieved with an adjustable motorized screen mount comprising a stand, adapted to be placed on a floor or attached to a wall or a ceiling; a bracket, adapted to be attached to a screen; and a motor, arranged to rotate a motor output shaft such that, upon rotation of the motor shaft, the rotary motion is transmitted, via a mechanical transmission, to a transmission output shaft which moves the bracket relative to the stand, wherein the mechanical transmission comprises a multi-stage hypocycloid reduction gear train.

With a multi-stage hypocycloid reduction gear train, it is possible to obtain a sufficient transmission ratio between an electric motor and a transmission output shaft within a compact volume. The shape and rotary axis orientation of a hypocycloid gear train makes it well adapted to fit together with the whole transmission, including the motor and any clutch, inside a single tubular housing that will visually only appear to be a hinge or a support or frame member. This configuration is well suited for both rotary and axially translatory motions. At the same time, a hypocycloid gear with a high transmission ratio has a high number of teeth in simultaneous engagement, which makes the device capably of reliably carrying and moving heavy weights. Further, a hypocycloid gear train comprises only few moving parts, making it inexpensive and easy to assemble.

Preferably, the multi-stage hypocycloid reduction gear train comprises a first internal ring gear, connected to the stand, and a second internal ring gear, connected to and arranged to, upon rotation, move the bracket, the internal ring gears being coaxial; an orbit gear, eccentrically arranged inside said first and second internal ring gears and having a first set of teeth meshing with the first internal ring gear and a second set of teeth meshing with the second internal ring gear; and a rocker shaft, connected to the motor output shaft and having an axis of rotation concentric with said first and second internal ring gears, the rocker shaft having an eccentric body journalled centrically in said orbit gear.

This configuration of a hypocycloid gear train may be implemented in a particularly compact volume, using particularly few parts. The whole transmission of a mount capable of carrying a large plasma screen may be accommodated in a narrow tube with 50 mm diameter. The height taken up inside the tube of, e.g., a two-stage hypocycloid gear train may be as low as 30 mm.

In a preferred embodiment, the transmission output shaft is arranged to, upon rotation of the motor, turn the bracket relative to the stand about an axis of rotation parallel to, or concentric with the axis of rotation of the transmission output shaft.

This embodiment is particularly well suited for imparting a rotary motion to a bracket, as the mechanism itself does not inherently constrain the maximum turning range; for example, a mount that is not obstructed by any other objects, such as a floor mount, may be rotated a limitless number of turns, or be provided with end stops where deemed suitable.

Preferably, the mechanical transmission further comprises a frictional clutch, and more preferably, the frictional clutch is a spring-loaded toothed clutch comprising first and second clutch disks having surfaces facing each other, the surfaces being profiled with crests extending radially. Thanks to the clutch, it is possible to turn the bracket without operating the motor. Further, should any object obstruct the trajectory of the bracket or screen, or should any force otherwise be unwillingly applied to the screen, a slip of the clutch will prevent any damage to the transmission or the motor.

In a preferred embodiment, the circumferential surface of the transmission output shaft is in threaded engagement with the inner surface of a circular cylindrical tube that is connected to the bracket, such that the transmission output shaft is arranged to translate the tube along the rotary axis of the transmission output shaft upon operation of the motor.

This embodiment is particularly well suited for imparting a translatory motion to a bracket. Any threaded engagement may be used, i.e. there may be threads on the circumferential surface of the transmission output shaft, and any type of structure arranged to mesh with the threads on the inner surface of the tube. Or, the threads may be present on the inner surface of the tube, or on both surfaces.

Preferably, the multi-stage hypocycloid reduction gear train has a total transmission ratio of between 200:1 and 2000:1, as a transmission ratio outside this transmission range will either make the mount unable to move the heavy weight that a large screen represents, or yield a motion of the screen that an operator would find to be either too slow or too fast.

Preferably, the multi-stage hypocycloid reduction gear train is a two-stage hypocycloid reduction gear train, as two stages are sufficient to achieve a high enough transmission ratio, and minimizes the number of components required in the device.

Preferably, the motor and the hypocycloid gear train are contained in a single cylindrical housing, as this is an aesthetically very attractive embodiment of the mount.

In a preferred embodiment, the screen mount is arranged to translate as well as rotate the bracket relative to the stand.

### Brief description of drawings

Fig. 1 is a schematic drawing of an adjustable motorized screen mount according to the invention.
Fig. 2 is a sectional view of a transmission for a reconfigurable motorize screen mount according to the invention.
Fig. 3 is an exploded view, in perspective, of the transmission in fig. 2.
Fig. 4 is an exploded view, in perspective, of the transmission in fig. 2.

### Detailed description of preferred embodiments of the invention

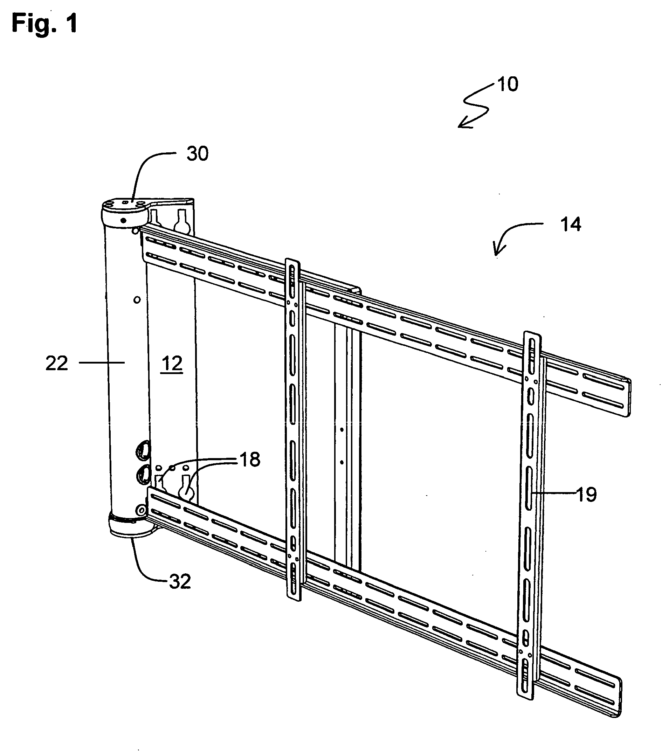

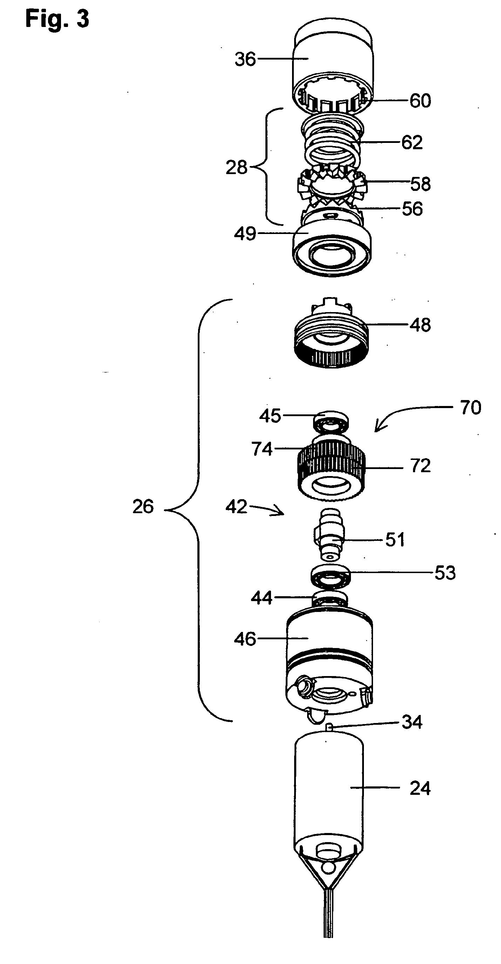

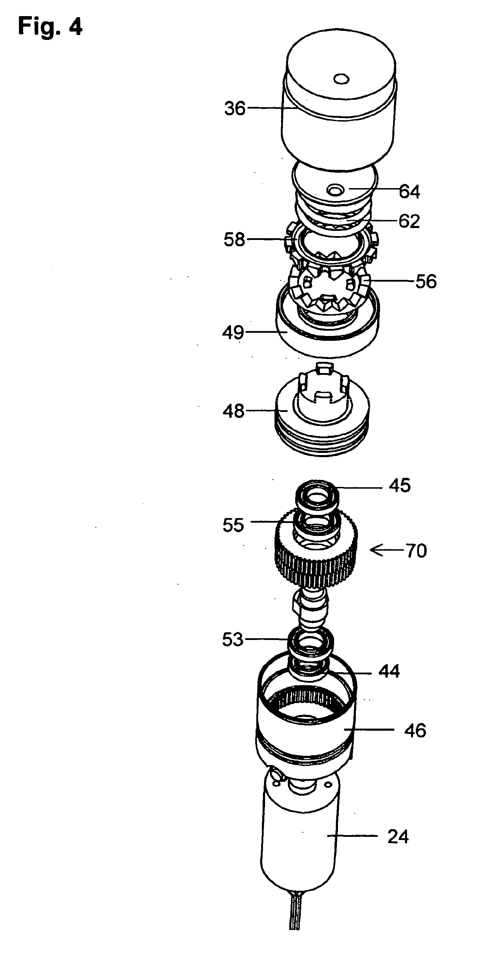

In figs 1-4, like reference numerals refer to like elements, and for clarity, all reference numerals and/or elements are not shown in all figures.

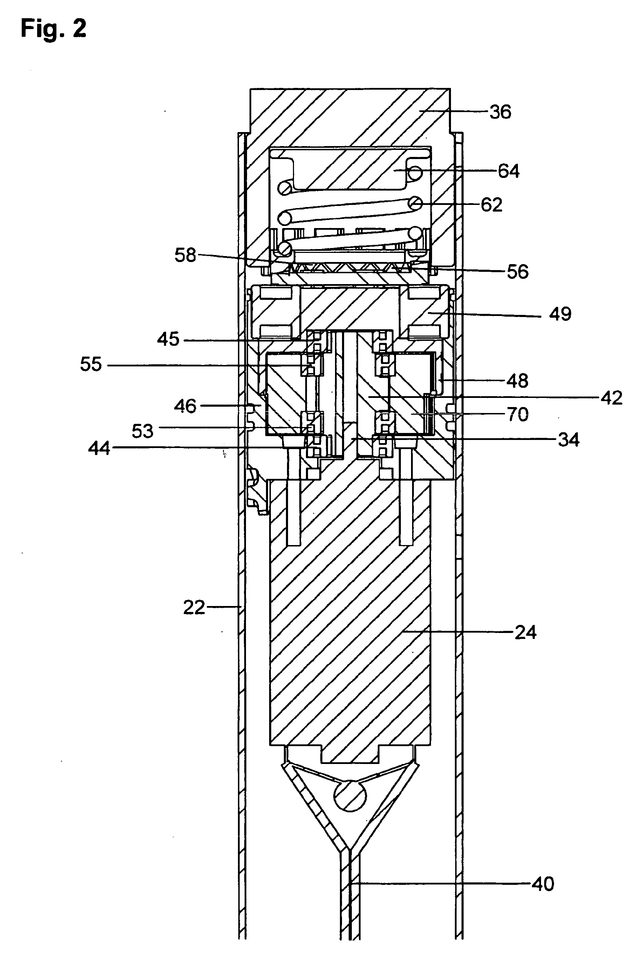

Fig. 1 illustrates schematically an exemplary embodiment of an adjustable motorized screen mount 10, which is adapted for mounting a screen onto a vertical wall or a ceiling. The screen mount 10, which in the figures is oriented to be mounted vertically on a wall, but might as well be mounted horizontally to a ceiling, comprises a stand 12 and a bracket 14. The stand 12 has a flat surface, which is provided with mounting holes 18 for fixing the stand 12 to the wall by means of screws (not shown). The bracket 14 is provided with mounting holes 19 for fixing a screen (not shown) to the bracket 14 by means of screws (not shown). Further, the bracket 14 is connected to the stand 12 by means of a "motorized hinge", i.e. a tubular housing 22 containing a transmission that is further described with reference to figs 2-4.

The transmission of figs 2-4 comprises an electric motor 24, a two-stage hypocycloid reduction gear train 26, and a clutch assembly 28. The housing 22 is attached to the bracket 14 and rotatably journalled to upper and lower hinge support portions 30, 32 (Fig. 1) of the stand 12.

The motor 24 is arranged to rotate a motor output shaft 34, which upon operation of the motor 24 transmits a rotary motion through the hypocycloid gear train 26 and the clutch assembly 28 to a transmission output shaft 36, which is fixed to the tubular housing 22. In this example, the hypocycloid gear train 26 has a transmission ratio of approximately 1250:1, i.e. 1250 turns of the motor output shaft 34 would roughly result in one complete turn of the clutch assembly 28, and consequently of the tubular housing 22 as well as of the bracket 14.

The electric motor 24 receives a drive current from a motor controller via motor drive cabling 40.

A further clarification of the operation and details of the hypocycloid gear train 26 and the clutch assembly 28 will now follow.

Rotary motion of the motor output shaft 34 is transmitted into the hypocycloid gear train 26 via a rocker shaft 42, connected to and having an axis of rotation concentric with the motor output shaft 34. The lower end of the rocker shaft 42 is journalled in a lower rocker shaft bearing 44 in the centre of a first internal ring gear 46, which is fixed to the lower hinge support portion 32 of the stand 12 via the housing of the motor 24. The first internal ring gear is, in this example, provided with 52 teeth facing radially inwards. In its upper end, the rocker shaft 42 is journalled in an upper rocker shaft bearing 45 in the centre of a second internal ring gear 48. The second internal ring gear 48, having 53 teeth, is centrically journalled in a ring gear bearing 49 that is located in an upper portion of the first internal ring gear 46. Further, the rocker shaft 42 has an eccentric body 51, which is journalled centrically in lower and upper orbit gear bearings 53, 55 in an orbit gear 70. The orbit gear 70 is eccentrically arranged inside the first and second internal ring gears 46, 48, and has a first set of 50 teeth 72 and second set of 51 teeth 74 around its perimeter. The first and second sets of teeth 72, 74 of the orbit gear 70 mesh with the teeth of the first and second internal ring gears 46, 48, respectively. The orbit gear 70 is thus arranged to orbit inside the ring gears 46, 48.

In the first reduction stage of the two-stage hypocycloid gear train 26, a complete turn of the motor shaft 34 will result in the orbit gear 70 rolling a complete turn on the internal teeth of the first internal ring gear 46. At the end of this turn, the orbit gear 70 will have rotated 2 teeth or 2/50 revolutions, i.e. the first reduction stage of the hypocycloid gear train 26 has a transmission ratio of about 25:1.

In the second reduction stage of the two-stage hypocycloid gear train 26, a complete turn of the orbit gear 70 around its axis, while it's rolling along the internal teeth of the second internal gear 48, will result in a rotation of the second internal ring gear 48 of one tooth. The second reduction stage thus has a transmission ratio of about 50:1, resulting in a total transmission ratio of the complete two-stage hypocycloid gear train 26 of about 1250:1.

The second internal ring gear 48 is connected to a toothed, spring-loaded clutch assembly 28, comprising a first clutch disk 56, which is attached to the second ring gear 48, and a second clutch disk 58, which is connected to the transmission output shaft 36 via splines 60 that are parallel to the axis of rotation. The clutch disks' 56, 58 surfaces facing each other have identical triangular profiles with crests extending radially, so as to provide increased friction to a rotary sliding motion of the clutch disks 56, 58 relative to each other. In order to provide an adjustable friction of the clutch 28, e.g. for accommodating for different screen weights when attaching the mount 10 horizontally to a ceiling, the clutch 28 is provided with a friction adjustment spring 62. Any clutch friction within a designed range may be obtained by translating a pressure plate 64 upwards or downwards by means of a screw (not shown) that penetrates a hole in the upper surface of the transmission output shaft 36, and engages with threads in a hole in the pressure plate 64.

The transmission output shaft 36 is force fit to the tubular housing 22, such that a rotary motion of the motor output shaft 34 will translate through the two-stage hypocycloid gear train 26 and the clutch assembly 28, via the transmission output shaft 36 and the tubular housing 22, to the screen bracket 14, which will turn about the rotary axis of the motor output shaft 34. And thanks to the clutch assembly 28, a manual rotation of the screen bracket 14, willingly or unwillingly, or an unexpected stop due to any object obstructing the screen's trajectory, will not cause any damage to the transmission or the motor 24. In an alternative embodiment void of a clutch assembly, the second internal ring gear 48 itself may, in fact, also constitute the transmission output shaft.

Even though the mechanism itself does not limit the rotation of the bracket, it may be desired to have the ability to pre-set particular positions. For instance, in a "TV Off' position of an embodiment of the invention adapted for mounting a TV onto a wall, the TV may be retracted to the wall, and the bracket may be set to automatically swivel out to a default "TV On" position when the TV is switched on. User defined positions, e.g. a "Couch" or a "Kitchen" position, may also be set.

As it is possible to operate the mount by hand, it is not sufficient to keep track of the position of the bracket by counting the number of revolutions of the electric motor. Instead, the mount is provided with three magnetic sensors on the lower hinge support, located at three different radial distances from the axis of rotation of the tubular housing. Each sensor is arranged to interact with a magnet, each of which is located on a washer having a diameter adapted to the radial location of the corresponding magnetic sensor. The three washers are concentric, individually adjustable around the rotary axis of the tubular housing, and arranged to rotate with the tubular housing. In this manner, three adjustable and detectable setpoint positions of the mount are obtained.

Using the mechanism above, it is also possible to obtain axial, with respect to the rotary axis of the motor, translation of the bracket relative to the stand. By locking the tubular housing to the stand with respect to rotation and instead allowing it to be moved in the axial direction, a rotary motion of the transmission output shaft may, using threads on the outer circumference of the transmission output shaft meshing with threads on the inner surface of the tubular housing, be translated to an extensive or retractive motion of the tubular housing.

It should also be within the abilities of a skilled person to connect a rotary "motorized hinge" in series with an axially translative mechanism, in the same or separate housings, to achieve rotary as well as translative adjustment capabilities in one single motorized screen mount.

The embodiments described in detail above are adapted for mounting on a wall or a ceiling. Any person skilled in the art is capable of adapting the screen mount for positioning on a floor, e.g. by modifying the shape of the stand and the bracket, and by changing the configuration of the mount so as to have the tubular housing located centrally behind or below the screen.

Further, there are several types of hypocycloid gear trains; in the type described above, it is the inner gear that undergoes an orbiting motion, but the function would be similar if the inner (orbit) gear would be journalled on a centric bearing and the ring gears would be eccentrically journalled, and undergo the orbital motion, instead. Also, the complete gear train may be turned inside out, i.e. instead of having an inner (orbit) gear with two sets of teeth connecting two ring gears, it is also possible to use a ring gear, having two sets of teeth in a similar manner, connecting two inner (orbit) gears.

Any two-stage hypocycloid reduction gear train may be used for a screen mount according to the invention and is within the scope of the appended claims. A preferred configuration from a compactness point of view is however an eccentrically journalled orbit gear with two sets of teeth, connecting two internal ring gears, along with the general teachings of the detailed description of an exemplary embodiment above:

As a skilled person will realize, also any number of stages greater than two, in the multi-stage hypocycloid reduction gear train, will also enable the construction of compact, high transmission ratio "motorized hinges" of the type shown, and are within the scope of the appended claims. Two stages however yield a sufficient transmission ratio in this case and should therefore be regarded as a preferred number from a fabrication cost point of view.

The invention is not limited to the specific embodiments described herein; many variations and modifications will be considered by a person skilled in the art. All those alternatives are within the scope of the appended claims.

## Claims

1. An adjustable motorized screen mount comprising
a stand (12), adapted to be placed on a floor or attached to a wall or a ceiling;
a bracket (14), adapted to be attached to a screen; and
a motor (24), arranged to rotate a motor output shaft (34) such that, upon rotation of the motor shaft (34), the rotary motion is transmitted, via a mechanical transmission, to a transmission output shaft (36) which moves the bracket (14) relative to the stand (12), wherein the mechanical transmission comprises a multi-stage hypocycloid reduction gear train (26).

2. A screen mount according to claim 1, wherein the multi-stage hypocycloid reduction gear train (26) comprises
a first internal ring gear (46), connected to the stand (12), and a second internal ring gear (48), connected to and arranged to, upon rotation, move the bracket (14), the internal ring gears (46, 48) being coaxial;
an orbit gear (70), eccentrically arranged inside said first and second internal ring gears (46, 48) and having a first set of teeth (72) meshing with the first internal ring gear (46) and a second set of teeth (74) meshing with the second internal ring gear (48); and
a rocker shaft (42), connected to the motor output shaft (34) and having an axis of rotation concentric with said first and second internal ring gears (46, 48), the rocker shaft (42) having an eccentric body (51) journalled centrically in said orbit gear (70).

3. A screen mount according to any of the previous claims, wherein the transmission output shaft (36) is arranged to, upon rotation of the motor (24), turn the bracket (14) relative to the stand (12) about an axis of rotation parallel to the axis of rotation of the transmission output shaft (36).

4. A screen mount according to any of the previous claims, wherein the transmission output shaft (36) is arranged to, upon rotation of the motor (24), turn the bracket (14) relative to the stand (12) about an axis of rotation concentric with the transmission output shaft (36).

5. A screen mount according to any of the claims 3-4, wherein the mechanical transmission further comprises a frictional clutch (28).

6. A screen mount according to claim 5, wherein the frictional clutch (28) is a spring-loaded toothed clutch comprising first and second clutch disks (56, 58) having surfaces facing each other, the surfaces being profiled with crests extending radially.

7. A screen mount according to any of the claims 1-2, wherein the circumferential surface of the transmission output shaft (36) has a threaded engagement with the inner surface of a circular cylindrical tube (22) that is connected to the bracket (14), such that the transmission output shaft (36) is arranged to translate the tube (22) along the rotary axis of the transmission output shaft (36) upon operation of the motor (24).

8. A screen mount according to any of the previous claims, wherein the multi-stage hypocycloid reduction gear train (26) has a total transmission ratio of between 200:1 and 2000:1.

9. A screen mount according to any of the previous claims, wherein the multi-stage hypocycloid reduction gear train (26) is a two-stage hypocycloid reduction gear train.

10. A screen mount according to any of the previous claims, wherein the motor (24) and the hypocycloid gear train (26) are contained in a single cylindrical housing (22).

11. A screen mount according to any of the previous claims, wherein the screen mount (10) is arranged to translate as well as rotate the bracket (14) relative to the stand (12).

## Patentansprüche

1. Einstellbares motorisiertes Bildschirmgestell mit
einem Halter (12), der geeignet ist, auf einen Boden platziert oder an einer Wand oder einer Decke angebracht zu werden;
einem Arm (14), der geeignet ist, an einem Bildschirm angebracht zu werden; und
einem Motor (24), der so angeordnet ist, dass er eine Motorabtriebswelle (34) derart rotiert, dass bei Rotation der Motorwelle (34) die Rotationsbewegung mittels einer mechanischen Übertragung an eine Übertragungsabtriebswelle (36) übertragen wird, die den Arm (14) relativ zu dem Halter (12) bewegt, wobei die mechanische Kraftübertragung einen mehrstufigen Hypozykloid-Untersetzungsgetriebezug (26) aufweist.

2. Bildschirmgestell nach Anspruch 1, bei dem der mehrstufige Hypozykloid-Untersetzungsgetriebzug (26) aufweist:
einen ersten Innenzahnkranz (46), der mit dem Halter (12) verbunden ist, und einen zweiten Innenzahnkranz (48), der mit dem Arm (14) verbunden ist und so angeordnet ist, dass er bei Rotation den Arm (14) bewegt, wobei die Innenzahnkränze (46, 48) koaxial sind;
ein Orbitzahnrad (70), das innerhalb der ersten und zweiten Innenzahnkränze (46, 48) exzentrisch angeordnet ist und einen ersten Satz Zähne (72), die in den ersten Innenzahnkranz (46) eingreifen, und einen zweiten Satz Zähne (74) aufweist, die in den zweiten Innenzahnkranz (48) eingreifen; und
eine Kipphebelachse (42), die mit der Motorabtriebswelle (34) verbunden ist und eine Rotationsachse aufweist, die konzentrisch mit den ersten und zweiten Innenzahnkränzen (46, 48) ist, wobei die Kipphebelachse (42) einen exzentrischen Körper (51) aufweist, der zentrisch in das Orbitzahnrad (70) als Zapfen eingesetzt ist.

3. Bildschirmgestell nach einem der vorhergehenden Ansprüche, bei dem die Übertragungsabtriebswelle (36) so angeordnet ist, dass sie bei Rotation des Motors (24) den Arm (14) relativ zu dem Halter (12) um eine Rotationsachse dreht, die parallel zu der Rotationsachse der Übertragungsabtriebswelle (36) ist.

4. Bildschirmgestell nach einem der vorhergehenden Ansprüche, bei dem die Übertragungsabtriebswelle (36) so angeordnet ist, dass sie bei Rotation des Motors (24) den Arm (14) relativ zu dem Halter (12) um eine Rotationsachse dreht, die konzentrisch mit der Übertragungsabtriebswelle (36) ist.

5. Bildschirmgestell nach einem der Ansprüche 3 bis 4, bei dem die mechanische Kraftübertragung ferner eine Reibkupplung (28) aufweist.

6. Bildschirmgestell nach Anspruch 5, bei dem die Schleifkupplung (28) eine federbelastete, gezahnte Kupplung mit ersten und zweiten Kupplungsscheiben (56, 58) ist, die zueinander zeigende Oberflächen aufweisen, wobei die Oberflächen mit Kuppen profiliert sind, die sich radial erstrecken.

7. Bildschirmgestell nach einem der Ansprüche 1 bis 2, bei dem die Umfangsoberfläche der Übertragungsabtriebswelle (36) einen Gewindeeingriff mit der inneren Oberfläche eines kreisförmigen zylindrischen Rohrs (22) aufweist, das mit dem Arm (14) verbunden ist, sodass die Übertragungsabtriebswelle (36) so angeordnet ist, dass das Rohr (22) entlang der Rotationsachse der Übertragungsabtriebswelle (36) bei Betrieb des Motors (24) umgesetzt wird.

8. Bildschirmgestell nach einem der vorhergehenden Ansprüche, bei dem der mehrstufige Hypozykloid-Untersetzungsgetriebezug (26) ein Gesamtübertragungsverhältnis zwischen 200:1 und 2000:1 aufweist.

9. Bildschirmgestell nach einem der vorhergehenden Ansprüche, bei dem der mehrstufige Hypozykloid-Untersetzungsgetriebezug (26) ein zweistufiger Hypozykloid-Untersetzungsgetriebezug ist.

10. Bildschirmgestell nach einem der vorhergehenden Ansprüche, bei dem der Motor (24) und der Hypozykloid-Getriebezug (26) in einem einzigen zylindrischen Gehäuse (22) enthalten sind.

11. Bildschirmgestell nach einem der vorhergehenden Ansprüche, bei dem das Bildschirmgestell (10) so angeordnet ist, dass der Arm (14) relativ zu dem Halter (12) sowohl umgesetzt als auch rotiert wird.

## Revendications

1. Monture d'écran réglable motorisée comprenant
un pied (12), adapté pour être placé sur un sol ou fixé à un mur ou un plafond ;
un support (14), adapté pour être fixé à un écran ; et
un moteur (24), agencé pour faire tourner un arbre de sortie de moteur (34) de sorte que, lors de la rotation de l'arbre de moteur (34), le mouvement de rotation est transmis via une transmission mécanique, à un arbre de sortie de transmission (36) qui déplace le support (14) par rapport au pied (12), dans lequel la transmission mécanique comprend un train d'engrenages réducteur hypocycloïdal polyétagé (26).

2. Monture d'écran selon la revendication 1, dans laquelle le train d'engrenages réducteur hypocycloïdal polyétagé (26) comprend
une première couronne interne (46), raccordée au pied (12), et une seconde couronne interne (48), raccordée et agencée pour, lors de la rotation, déplacer le support (14), les couronnes internes (46, 48) étant coaxiales ;
un engrenage satellite (70), agencé excentriquement à l'intérieur desdites première et seconde couronnes internes (46, 48) et comportant un premier jeu de dents (72) s'engrenant avec la première couronne interne (46) et un second jeu de dents (74) s'engrenant avec la seconde couronne interne (48) ; et
un arbre planétaire (42), raccordé à l'arbre de sortie de moteur (34) et ayant un axe de rotation concentrique auxdites première et seconde couronnes internes (46, 48), l'arbre planétaire (42) comportant un corps excentrique (51) tourillonné de façon centrale dans ledit engrenage satellite (70).

3. Monture d'écran selon l'une quelconque des revendications précédentes, dans laquelle l'arbre de sortie de transmission (36) est agencé pour, lors de la rotation du moteur (24), faire tourner le support (14) par rapport au pied (12) autour d'un axe de rotation parallèle à l'axe de rotation de l'arbre de sortie de transmission (36).

4. Monture d'écran selon l'une quelconque des revendications précédentes, dans laquelle l'arbre de sortie de transmission (36) est agencé pour, lors de la rotation du moteur (24), faire tourner le support (14) par rapport au pied (12) le long d'un axe de rotation concentrique à l'arbre de sortie de transmission (36).

5. Monture d'écran selon l'une quelconque des revendications 3 à 4, dans laquelle la transmission mécanique comprend en outre un embrayage à friction (28).

6. Monture d'écran selon la revendication 5, dans laquelle l'embrayage à friction (28) est un embrayage denté à ressort comprenant un premier et un second disque d'embrayage (56, 58) comportant des surfaces se faisant face l'une à l'autre, les surfaces étant profilées avec des crêtes s'étendant radialement.

7. Monture d'écran selon l'une quelconque des revendications 1 à 2, dans laquelle la surface circonférentielle de l'arbre de sortie de transmission (36) a un accouplement fileté avec la surface interne d'un tube cylindrique circulaire (22) qui est raccordé au support (14), de sorte que l'arbre de sortie de transmission (36) est agencé pour translater le tube (22) suivant l'axe de rotation de l'arbre de sortie de transmission (36) lors du fonctionnement du moteur (24).

8. Monture d'écran selon l'une quelconque des revendications précédentes, dans laquelle le train d'engrenages réducteur hypocycloïdal polyétagé (26) a un rapport total de transmission compris entre 200 : 1 et 2 000 : 1.

9. Monture d'écran selon l'une quelconque des revendications précédentes, dans laquelle le train d'engrenages réducteur hypocycloïdal polyétagé (26) est un train d'engrenages réducteur hypocycloïdal à deux étages.

10. Monture d'écran selon l'une quelconque des revendications précédentes, dans laquelle le moteur (24) et le train d'engrenages réducteur hypocycloïdal (26) sont contenus dans un logement cylindrique unique (22).

11. Monture d'écran selon l'une quelconque des revendications précédentes, dans laquelle la monture d'écran (10) est agencée pour déplacer par translation ainsi que rotation le support (14) par rapport au pied (12).
